# EUROPEAN PATENT APPLICATION

(11) **EP 4 759 202 A1**
(43) Date of publication of application: **17.06.2026**
(21) Application number: 25222307.8
(22) Date of filing: 10.12.2025
(51) Int. Cl.: A47J 31/00, A47J 31/10

(54) **AUTOMATIC POUR OVER COFFEE MACHINE AND METHODS OF USE**

(30) Priority: 11.12.2024 US 202463730573 P; 03.03.2025 US 202563765895 P; 21.08.2025 US 202519306347
(71) Applicant: Shenzhen Chenbei Technology Co., Ltd., Shenzhen, Guangdong 518000 (CN)
(72) Inventor: Barnard, Pierce James, Newport Beach (US); Abraham, Rian Carlo, Lakewood (US); Gopalakrishnan, Guhan Damodaran, Tustin (US)
(74) Representative: Bird & Bird LLP - Hamburg

(57) **Abstract**

An automatic pour over coffee machine has a coffee filter assembly supported on a machine housing. The coffee filter assembly has a basket for receiving coffee grounds and a rotation motor operatively coupled to the basket for rotating the basket relative to the machine housing. A water delivery system is configured to dispense heated water over the coffee grounds. The water delivery system includes a water reservoir, a heating source for heating water pumped from the water reservoir, and a nozzle for receiving the heated water. A linear motor is operatively coupled to the nozzle for moving the nozzle laterally relative to the machine housing. A vibration motor is operatively coupled to the basket for vibrating the basket in a selected vibration sequence during dispensing of the heated water to produce a desired "pour over" coffee flavor profile.

## Description

### FIELD

The present disclosure relates generally to a coffee making system and, more particularly, to a coffee machine that automatically replicates the steps of making pour over coffee.

### BACKGROUND

"Pour over" coffee is typically made by using a gooseneck kettle to pour heated water into a filter cup that contains a bed of moderately grounded coffee beans. The heated water is introduced into the filter cup by moving the pour stream from the center to the outer edge of the filter cup in a spiral manner to evenly soak the coffee grounds. After a desired amount of water is added, the user must generally wait several minutes for the coffee grounds to "bloom" within the heated water. Bloom refers to the release of gasses from the coffee beans that were trapped in the beans during the roasting process. When the heated water contacts the coffee grounds, the heated water accelerates the gas release to reduce a sour taste of the coffee. Manual agitation of the filter cup during the brewing process ensures that all the coffee grounds in the filter cup begin to brew at the same time. Compared to coffee made in a traditional coffee machine, pour over coffee can provide the user with a superior coffee taste due to the benefits listed above.

### SUMMARY

Manually prepared pour over coffee allows a user to control many variables, including water temperature, water pouring time, and water pouring pattern, etc., to produce coffee having a desired taste and aroma, i.e., "flavor profile." However, the steps involved in making pour over coffee can be time consuming and inconvenient for a user. Therefore, it would be desirable to provide an automatic coffee machine that replicates the manual steps involved in producing coffee with a "pour over" coffee flavor profile.

While automatic pour over coffee machines currently exist, these machines typically dispense the water radially from the nozzle, resulting in an uneven water flow of water contacting the coffee grounds. Pumped and heated water from these machines, moreover, causes too strong of a water stream to contact the coffee grounds, disturbing the grounds during the brewing process. Thus, an ideal system would allow for the water to be more gently dispensed directly over the coffee grounds, while reducing water vapor/steam build up in the nozzle that causes turbulence in the dispensed water.

This disclosure describes an automatic pour over coffee machine that replicates the manual pour over process. The machine of this disclosure allows a user to control a taste/flavor profile of the coffee more precisely by allowing the user to control several variables, such as water flow rate, agitation/vibration of the coffee bed, coffee bed saturation, precise bloom times, and water temperature, based on different cup sizes and personal preference. Furthermore, the automatic pour over coffee machine of this disclosure allows the use of gravity to instigate a siphon effect to gently dispense the water from the nozzle, reducing disturbance to the coffee grounds.

Embodiments of the automatic pour over coffee machine of this disclosure may include one or more of the following, in any suitable combination.

According to an embodiment, an automatic pour over coffee machine comprises a machine housing and a coffee filter assembly supported on the machine housing. The coffee filter assembly comprises a basket for holding coffee grounds, the basket being removably insertable into a gasket assembly, a rotation assembly for rotating the basket relative to the machine housing and a water delivery system arranged within the machine housing, the water delivery system being configured to dispense heated water in a laminar flow over the coffee grounds. The water delivery system comprises a nozzle for receiving heated water, the nozzle comprising a water outlet, a driving assembly coupled to the nozzle for moving the nozzle laterally relative to the machine housing; and a vibration assembly for vibrating the basket in a selected vibration sequence. A combination of rotation of the basket, lateral movement of the nozzle, and vibration of the basket in the selected vibration sequence produces a desired "pour over" coffee flavor profile.

The basket may comprise a flat lower surface and is configured to receive a cone-shaped coffee filter holder.

The automatic pour over coffee machine may further comprise at least one dampener configured to dampen vibration from the vibration assembly. The at least one dampener may be or comprise at least one first dampener positioned between the gasket assembly and the machine housing. The at least one dampener may be or compirse a second dampener co-molded to a body of the gasket assembly.

The automatic pour over coffee machine may further comprise a drip stop configured to selectively prevent coffee brew from exiting the basket.

The water outlet may be configured to dispense the heated water in a direction that is substantially perpendicular to the nozzle.

The nozzle may comprise a water inlet. A chamber may be defined by the nozzle and may be located between the water inlet and the water outlet. A bottom surface of the chamber may be sloped between the water inlet and the water outlet. An angle of the slope of the bottom surface of the chamber may be about 5 degrees.

The automatic pour over coffee machine may further comprising a steam outlet, which may be in fluid communication with the chamber. The steam outlet may be configured to release water vapor created by the heated water.

The automatic pour over coffee machine may further comprise a switch for sensing a speed of rotation of the basket.

The automatic pour over coffee machine may further comprise a sensor for sensing a speed and direction of the lateral movement of the nozzle relative to the machine housing.

An inner surface of the water outlet may comprise a rib for improving the laminar flow of the dispensed water.

According to an embodiment, a method of producing a desired "pour over" coffee flavor profile in an automatic pour over coffee machine comprises moving a nozzle laterally relative to a housing of the automatic pour over coffee machine, dispensing the heated water from a water outlet of the nozzle over a basket of the automatic pour over coffee machine, the basket having coffee grounds, rotating the basket relative to the housing, and vibrating the basket in a selected vibration sequence. A combination of rotation of the basket, lateral movement of the nozzle, and vibration of the basket in the selected vibration sequence produces the desired "pour over" coffee flavor profile.

The method may further comprise vibrating the basket in the selected vibration sequence before, during, or after dispensing the heated water over the coffee grounds.

The method may further comprise dispensing the heated water in a direction that is substantially perpendicular to the nozzle in a laminar flow.

The method may further comprise rotating the basket in a single rotational direction with sudden stops and starts in the rotation to create rotational agitation of the coffee grounds.

The method may further comprise abruptly changing a rotational direction of the basket to create a rotational agitation of the coffee grounds.

According to an embodiment, a rotation assembly for use with an automatic pour over coffee machine (which may be an automatic pour over coffee machine according to an aforementioned embodiment) comprises a basket for holding coffee grounds (which may be the basket for holding grounds of an automatic pour over coffee machine according to an aforementioned embodiment), a gasket assembly for receiving the basket, and a rotation motor operatively coupled to the gasket assembly for rotating the gasket assembly relative to a housing of the automatic pour over coffee machine during dispensing of heated water in a laminar flow over the coffee grounds. A speed of rotation of the basket together with the laminar flow of the heated water produces a desired "pour over" coffee flavor profile.

According to an embodiment, a vibration assembly for use with an automatic pour over coffee machine (which may be an automatic pour over coffee machine according to an aforementioned embodiment) comprises a basket for holding coffee grounds (which may be the basket for holding grounds of an automatic pour over coffee machine according to an aforementioned embodiment), a gasket assembly for receiving the basket, a basket holder configured to support the gasket assembly, and a vibration motor housed within the basket holder, the vibration motor operatively coupled to the to the gasket assembly to vibrate the basket in a selected vibration sequence. Vibration of the basket in the selected vibration sequence produces a desired "pour over" coffee flavor profile.

A reading of the following detailed description and a review of the associated drawings will make apparent these and other features and advantages. Both the foregoing general description and the following detailed description are explanatory only and are not restrictive of aspects as claimed.

### BRIEF DESCRIPTION OF THE DRAWINGS

The disclosure will be more fully understood by reference to the detailed description, in conjunction with the following figures, wherein:
FIGS. 1A and 1B show an isometric view of an automatic pour over coffee machine, according to an embodiment of this disclosure;
FIG. 2A illustrates a coffee filter assembly of the machine of FIGS. 1A and 1B, according to an embodiment of the disclosure;
FIG. 2B illustrates components of a basket support member of the machine of FIGS. 1A and 1B, according to an embodiment of the disclosure;
FIG. 2C-2E illustrate a wire retraction mechanism of the coffee filter assembly of the machine of FIGS. 1A and 1B, according to an embodiment of the disclosure;
FIG. 2F illustrates a vibration/agitation system of the coffee filter assembly, according to an embodiment of the disclosure;
FIGS. 2G and 2H illustrate an alternative configuration of a "two-in-one" coffee filter assembly, according to an embodiment of the disclosure;
FIGS. 2I and 2J illustrate an alternative configuration of a basket support member and rotation motor according to an embodiment of the disclosure;
FIG. 2K illustrates components a gasket assembly, according to an embodiment of the disclosure;
FIGS. 3A-3D illustrate patterns of dispensed water created by the coffee filter assembly, according to an embodiment of the disclosure;
FIGS. 4A-4D illustrate a drip stop of the coffee filter assembly, according to an embodiment of the disclosure;
FIG. 5A is a schematic diagram of a water delivery system of the machine of FIGS. 1A and 1B, according to an embodiment of the disclosure;
FIGS. 5B and 5C illustrate the lateral movement of the nozzle of the water delivery system, according to an embodiment of the disclosure;
FIGS. 5D and 5E illustrate an alternative configuration of a water delivery system of the machine of FIGS. 1A and 1B, according to an embodiment of the disclosure;
FIGS. 5F and 5G illustrate the action of the water delivery system of FIGS. 5A-5C, according to an embodiment of the disclosure;
FIG. 5H illustrates an alternative configuration of a water delivery system, according to an embodiment of the disclosure;
FIGS. 5I-5K illustrate an alternative configuration of a water delivery system, according to an embodiment of the disclosure;
FIGS. 5L-5N illustrate an alternative configuration of a nozzle of the water delivery system, according to an embodiment of the disclosure;
FIG. 6A is a block diagram of a computer system that may be used as a controller in the machine of FIGS. 1A and 1B, according to an embodiment of the disclosure;
FIG. 6B is a flow chart of a brewing process control sequence, according to an embodiment of the disclosure;
FIGS. 6C-6H are a flow charts of a coffee brewing sequence, according to an embodiment of the disclosure;
FIG. 6I is a flow chart of a heating coil operation sequence, according to an embodiment of the disclosure;
FIG. 6J is a graph of a brewing sequence process map for brewing a one cup recipe, according to an embodiment of the disclosure; and
FIGS. 7A-7D illustrates various methods of water recirculation within the machine of FIGS. 1A and 1B, according to embodiments of the disclosure.

### DETAILED DESCRIPTION

In the description that follows, like components have been given the same reference numerals, regardless of whether they are shown in different embodiments. To illustrate embodiment(s) in a clear and concise manner, the drawings may not necessarily be to scale, and certain features may be shown in somewhat schematic form. Features that are described and/or illustrated with respect to one embodiment may be used in the same way or in a similar way in one or more other embodiments and/or in combination with or instead of the features of the other embodiments.

As used in the specification and claims, for the purposes of describing and defining the invention, the term "substantially" is used to represent the inherent degree of uncertainty that may be attributed to any quantitative comparison, value, measurement, or other representation. The term "substantially" is also used herein to represent the degree by which a quantitative representation may vary from a stated reference without resulting in a change in the basic function of the subject matter at issue.

Unless specifically stated or obvious from context, the term "about" is understood as within a range of normal tolerance in the art. Unless otherwise clear from context, all numerical values provided herein are modified by the term "about." Provided ranges are understood to be shorthand for all the values within the range. "Comprise," "include," and/or plural forms of each are open ended and include the listed parts and can include additional parts that are not listed. "And/or" is open-ended and includes one or more of the listed parts and combinations of the listed parts. Use of the relative terms "top," "bottom," "above," "below" and the like helps only in the clear description of the disclosure and does not limit the structure, positioning and/or operation of the disclosure in any manner.

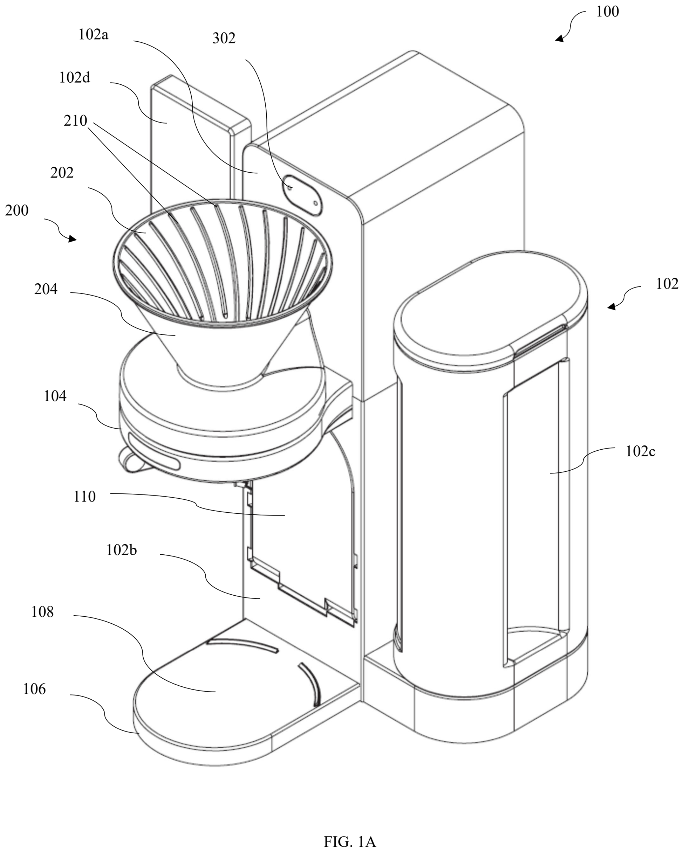

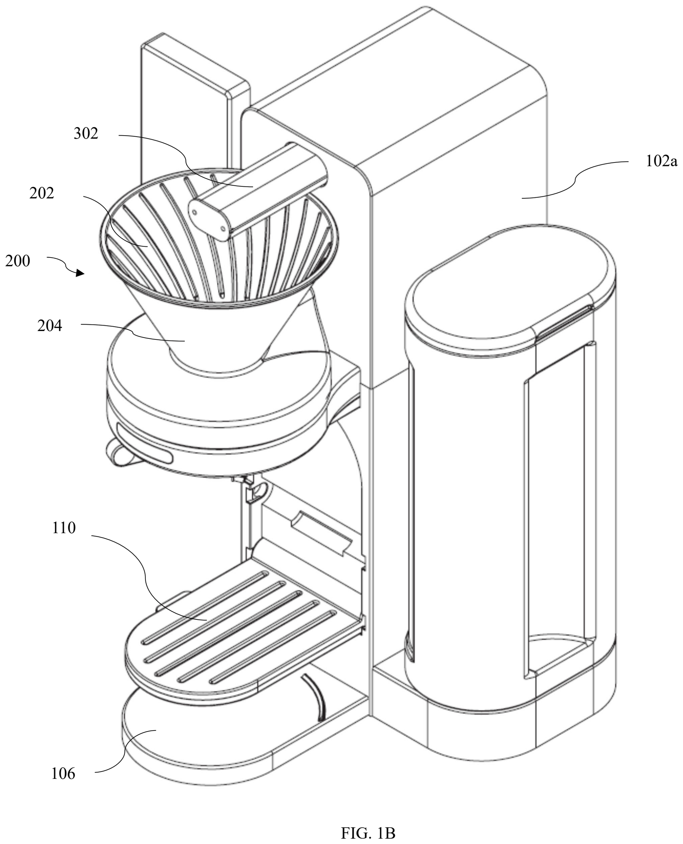

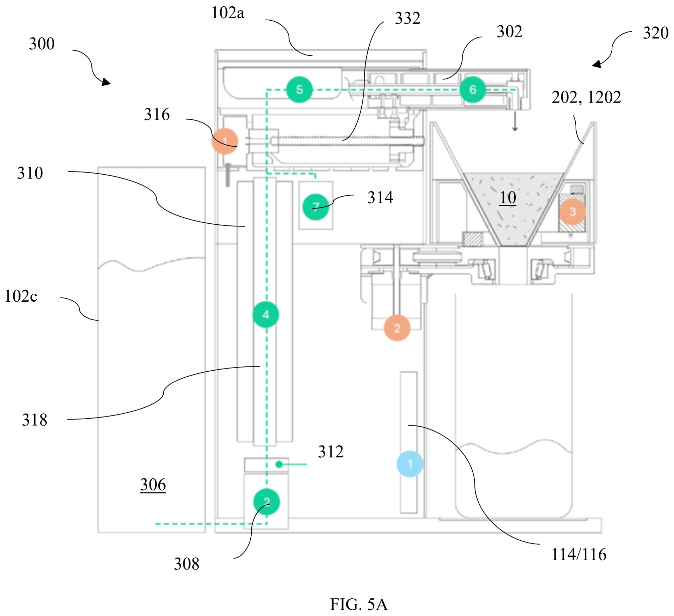

FIGS. 1A and 1B show an isometric view of an automatic pour over coffee machine 100, according to an embodiment of this disclosure. As shown in FIG. 1A, the machine 100 may include a machine housing 102 comprising an upper housing 102a, a lower housing 102b, a reservoir housing 102c, and a user interface 102d. While the user interface 102d is shown in FIG. 1A as being located on a side panel, the disclosure contemplates that the user interface 102d may be located at any suitable place on the housing 102. An upper platform 104 may extend from the upper housing 102a for supporting a coffee filter assembly 200 that includes a coffee filter holder 202 insertable into a basket 204 (e.g., a brew basket). The coffee filter holder 202 may sit freely in the basket 204 and may be configured to hold a paper coffee filter in which the user places the coffee grounds. In embodiments, the basket 204 may or may not include a handle for removing the basket 204 from the machine 100. An inside surface of the coffee filter holder 202 may have a plurality of ribs 210 to prevent choking or clogging of the coffee grounds during the brew process. One of skill in the art will understand that the ribs 210 could be nubs or any raised protrusion configured to hold the paper filter away from an inner surface of the coffee filter holder 202. A lower platform 106 may extending from the lower housing 102b and may define an area 108 for holding a larger coffee holding vessel (e.g., a cup or carafe) in place below the coffee filter assembly 200. The lower housing 102b may also house a power source 114 and a control board 116 (FIG. 5A) for operating the machine 100. A middle platform 110 may be configured to fold down from a front of the housing 102 (FIG. 1B) for positioning a smaller coffee holding vessel below the coffee filter assembly 200. However, one of skill in the art will understand that the middle platform 110 could be arranged in any configuration that would allow a coffee holding vessel to be in closer proximity to the coffee filter assembly 200 with respect to the lower platform 106. A nozzle 302 may be configured to move laterally relative to the upper housing 102a between a retracted position (FIG. 1A) and an extended position (FIG. 1B) to deliver heated water over the coffee grounds in the coffee filter holder 202.

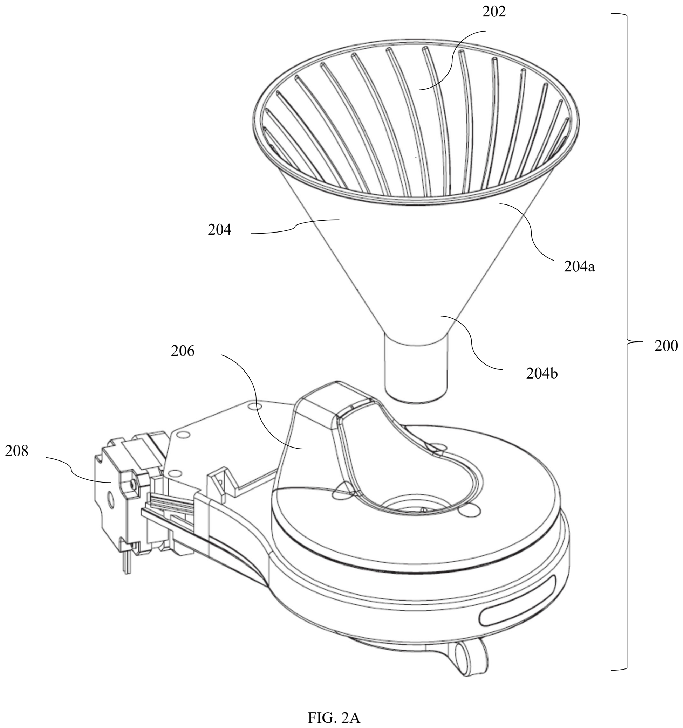

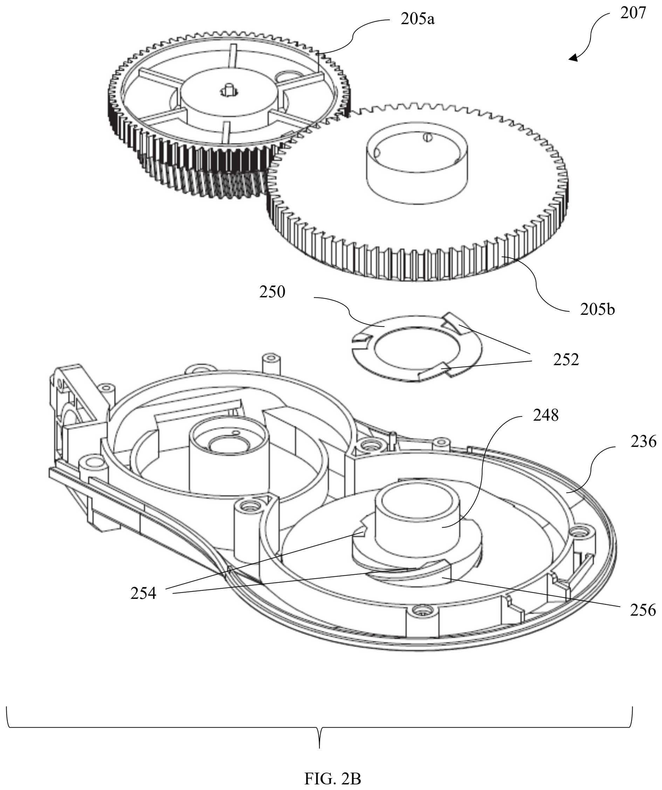

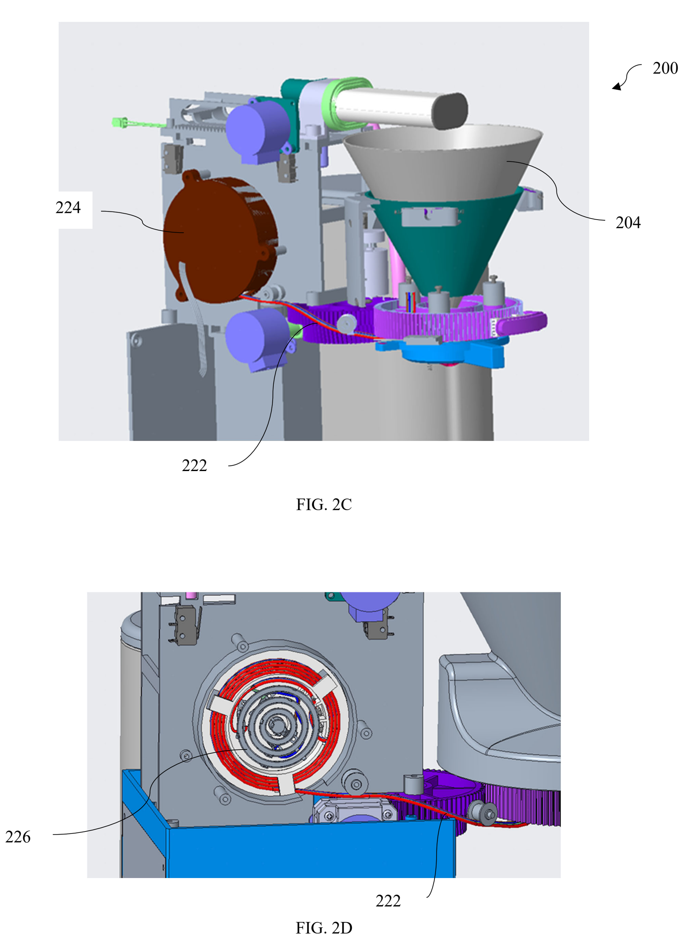

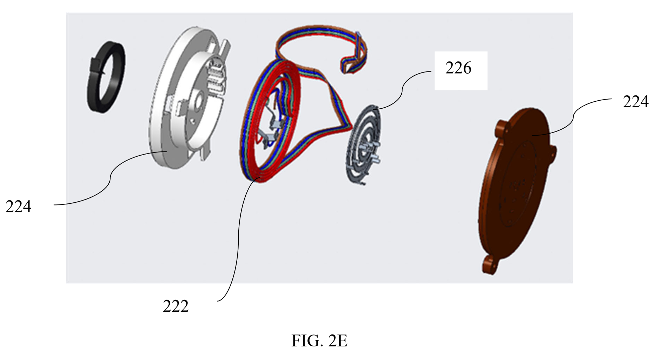

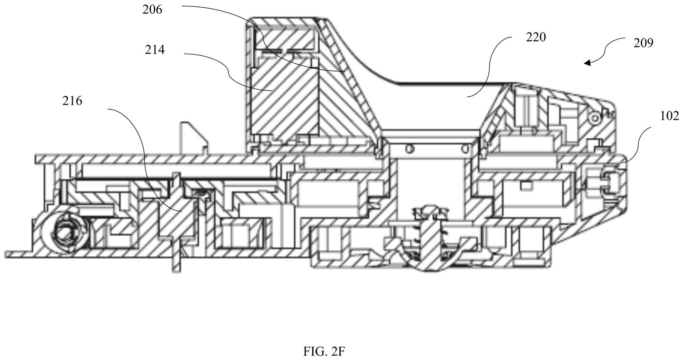

FIG. 2A illustrates the coffee filter assembly 200 in a disassembled view, according to an embodiment of the disclosure. As shown in FIG. 2A, the basket 204 may be in the shape of a cone for receiving the coffee filter holder 202 through a wider first end 204a of the basket 204 and dripping brewed coffee through a narrower second end 204b of the basket 204. The inverted shape of the cone may allow for a more concentrated flow of water through the coffee grounds compared to coffee filters that have a flat bottom or that are box shaped. In some embodiments, the cone may have a 60-degree angle, although the disclosure contemplates other suitable angles of the cone. The basket 204 may be removably insertable into a basket support member 206, which may comprise both a basket rotation assembly 207 (FIG. 2B) and a basket vibration system 209 (FIG. 2F). The basket rotation assembly may be configured such that the basket 204 is rotatable relative to the basket support member 206 and the machine housing 102. However, the disclosure contemplates that both the basket 204 and elements of the basket support member 206 could be configured to rotate together relative to the machine housing 102. The basket 204 may be operatively coupled to a rotation motor 208 (e.g., a stepper motor or any other suitable motor) for rotating the basket 204 as heated water is dispensed from the nozzle 302, as described in more detail below.

FIG. 2B illustrates the components of basket rotation assembly 207 in a disassembled view, according to an embodiment of the disclosure. As shown in FIG. 2B, the rotation motor 208 may operate to rotate the basket 204 via a gear train comprising gears 205a, 205b operatively coupled to the basket 204 and supported on a gear mount 236. However, the disclosure contemplates that the basket 204 could be belt and pulley driven, or driven by any other known method of rotation. The primary gear 205b may be configured to rotate about shaft 248. A ring 250 comprising one or more angled tabs 252 may be disposed about the shaft 248. During rotation in one direction (e.g., clockwise) of the primary gear 205b, the angled tabs 252 may prevent the primary gear 205b from engaging with detents 254 on the shaft 248, thus preventing the primary gear 205b from lowering into engagement with the gear 205a and causing the basket 204 to be spaced apart from the basket support member 206. This may prevent the basket 204 from rotating and vibrating even when the vibration motor is actuated. However, when the primary gear 205b is rotated in an opposite (e.g., counterclockwise) direction, the angled tabs 252 may direct the primary gear 205b downward along one or more ramps 256 disposed about the shaft 248. This downward movement of the primary gear 205b may bring the primary gear 205b into engagement with the gear 205a and the vibration motor 208, allowing the basket 204 to vibrate. Once the primary gear 205b locks into engagement with the ramps 256, the basket 204 may no longer rotate but may still be allowed to vibrate according to the selected vibration sequence.

FIG. 2C-2E illustrate a wire retraction mechanism 226 of the coffee filter assembly 200, according to an embodiment of the disclosure. As shown in FIGS. 2C-2E, a plurality of wires 222 may electrically couple to the power source 114 and control board 116 for delivering power to the vibration motor 214 (FIG. 2F) and a sensor (not shown) for detecting when the basket 204 is located in the basket support member 206. The wires 222 may be coupled to the retraction mechanism 226 housed within a casing 224 supported within the machine housing 102. For example, the retraction mechanism 226 may be a spiral torsion spring or other suitable spring or device capable of winding the wires 222. The retraction mechanism 226 may be configured to tension (i.e., remove slack) created in the plurality of the wires 222 when the basket 204 is rotated relative to the machine housing 102. The disclosure also contemplates other suitable means for eliminating slack from the wires 222, such as a roller driven by a motor, spring-loaded pins, or a slip ring.

FIG. 2F illustrates a vibration/agitation system 209 of the coffee filter assembly 200, according to an embodiment of the disclosure. As shown in FIG. 2F, the basket support member 206 may house the vibration motor 214 (e.g., an eccentric motor or any other suitable motor) for vibrating/agitating the basket 204 in a selected vibration sequence before, during or after the dispensing of the heated water depending on user preference and/or an amount of coffee to be brewed. For example, when brewing 1-3 cups of coffee, vibration may be added at two different time intervals during the brewing process. The first vibration may occur after an initial pour of water but before the bloom process begins. This vibration may run for ten seconds. The second vibration may occur after the final pour of water and may also run for ten seconds. However, the disclosure contemplates other vibration sequences. Adding vibration to the brewing process may mimic manual agitation of the coffee filter holder 202, which may help the water to completely saturate the coffee grounds, resulting in an even extraction of the coffee brew. Vibration may also help extract more the flavor notes from the ground coffee while reducing bitterness, particularly when brewing specialty coffee. The basket support member 206 may also house one or more first dampeners 216 between the basket support member 206 and the machine housing 102. The first dampener 216 may allow the basket 204, the basket support member 206, and the vibration motor 214 to vibrate, while preventing the rest of the housing 102 from vibrating. The basket 204 may also sit directly on a second dampener 220, which may be co-molded to the basket support member 206 such that the second dampener 220 is not removable from the basket support member 206. In embodiments, the second dampener 220 may be made of a flexible material such as silicone or another suitable material. The second dampener 220 may aid in reducing noise while vibrating the basket 204 and transferring motor vibration to the basket 204 since the basket 204 is under compression against the second dampener 220 when assembled. In addition to a vibration motor 214, one of skill in the art will understand that any suitable vibration/agitation mechanism may be used. For example, the vibration/agitation mechanism could consist of an eccentric mass motor, linear motor/voice coil, piezo actuator, hydraulic actuator, pneumatic actuator or spring-mass mechanical oscillator, or any other suitable vibration/agitation mechanism.

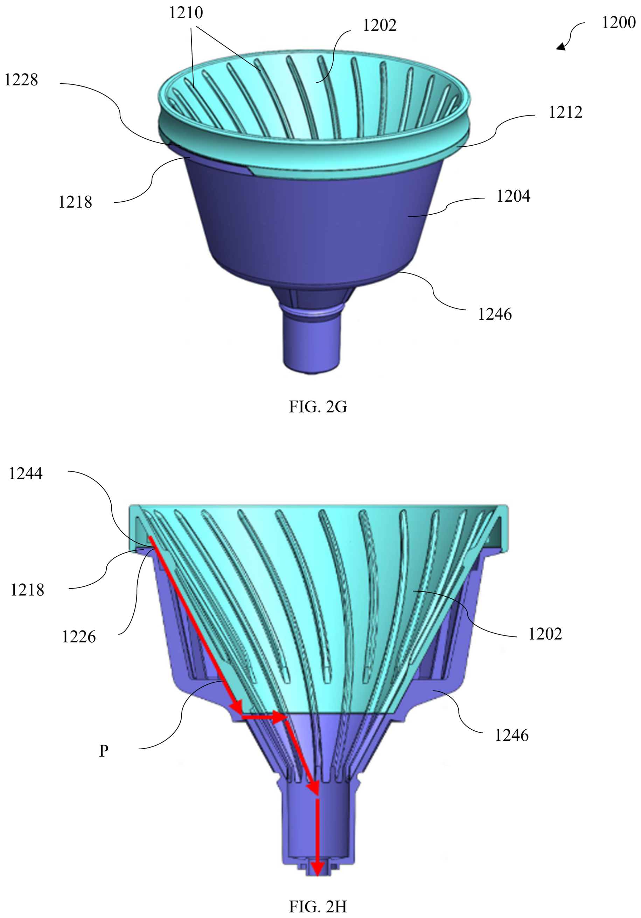

FIGS. 2G and 2H illustrate an alternative configuration of a "two-in-one" coffee filter assembly 1200, according to an embodiment of the disclosure. As shown in FIG. 2G, the coffee filter assembly 1200 may include a basket 1204 that has a flat lower surface 1246. Users may place a flat-bottomed paper coffee filter (not shown) directly into the basket 1204 for brewing larger amounts of coffee (e.g., 4-6 cups). Alternatively, when brewing smaller amounts of coffee (e.g., 1-2 cups), users may removably place a cone-shaped coffee filter holder 1202 into the basket 1204 for holding a cone-shaped paper coffee filter. One or more extrusions 1218 on the basket 1204 may be configured to engage with corresponding slots 1228 on a lip 1212 of the coffee filter holder 1202 to help properly align the ribs 1210 of the coffee filter holder 1202 with those on the inside of the basket 1204. As shown in FIG. 2H, when the coffee filter holder 1202 is placed into the basket 1204, a drain hole 1244 at a top of the coffee filter holder 1202 may align with a notch 1226 on the extrusion 1218 of the basket 1204 such that any accidental overflow of coffee from the coffee filter holder 1202 is directed along a pathway P towards the coffee holding vessel.

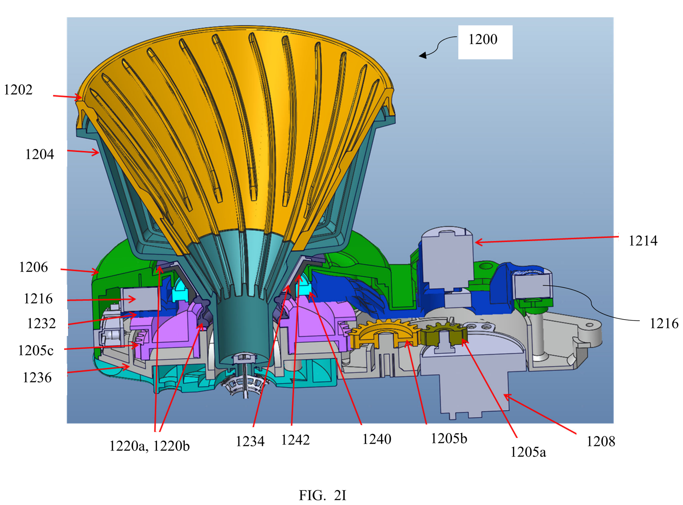

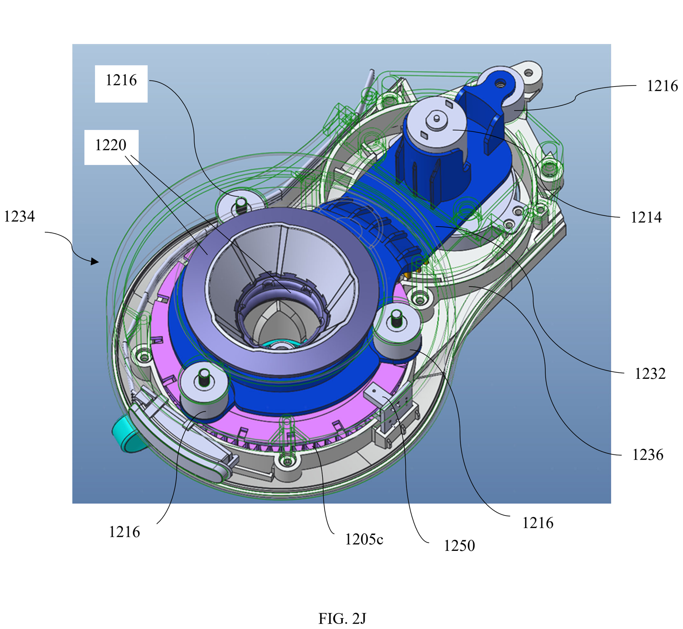

FIGS. 2I and 2J illustrate an alternative configuration of a basket support member 1206 and a rotation motor 1208 for use with the coffee filter assembly 1200, according to an embodiment of the disclosure. As shown in FIG. 2I, the basket 1204 may be removably inserted into a basket support member 1206, which may comprise both a basket rotation assembly and a basket vibration system. The basket support member 1206 may further comprise a gasket assembly 1234 supported by the basket support member 1206 such that both the basket 1204 and the coffee filter holder 1202 rotate together relative to the machine housing 102. The gasket assembly 1234 may include at least one second dampener 1220a, 1220b co-molded with a body of the gasket assembly 1234, which may be operatively coupled to a rotation motor 1208 (e.g., a stepper motor or any other suitable motor) for rotating the gasket assembly 1234 as heated water is dispensed from the nozzle 302. The rotation motor 1208 may operate to rotate the gasket assembly 1234 via a gear train comprising gears 1205a, 1205b, 1205c operatively coupled to the gasket assembly 1234 and supported on a gear mount 1236. A vibration plate 1232 may support a vibration motor 1214, a bearing 1240, a rotating bracket 1242, and at least one first dampener 1216, which may be three first dampeners 1216 positioned about the gasket assembly 1234 and a fourth first dampener 1216 positioned adjacent the vibration motor 1214, as shown. However, the disclosure contemplates more or fewer than four first dampeners 1216, and other positions of the first dampeners 1216. The first dampeners 1216 may allow the basket 1204, the gasket assembly 1234, and the vibration plate 1232 to vibrate, while preventing the basket support member 1206 from vibrating. During operation, the vibration motor 1214 may deliver vibration to the vibration plate 1232 and the rotating bracket 1242, and then to the gasket assembly 1234 and thus to the basket 1204. The second dampeners 1220a, 1220b may be configured to dampen the vibration from the vibration motor 1214 and also to serve as insulation. The bearing 1240 may aid in both rotating and vibrating the basket 1204. As shown in FIG. 2J, a switch 1250 (e.g., an inductive proximity switch or other suitable switch) may be configured to sense when the primary gear 1205c begins to rotate and the number of times the primary gear 1205c rotates. This information may be used to determine the orientation of the basket 1204, which in turn can be used to generate the required pour pattern for a selected brew cycle. The information may also help to adjust the speed of the rotation of the basket 1204 and to allow the basket 1204 to achieve desired start and end points in its rotation relative to the housing 102. In embodiments where the basket 1204 contains a handle, the information may also be used to ensure that the handle always returns to its home position. The disclosure also contemplates that the rotation of the basket 1204 can include rotating the basket 204 in a single rotational direction with sudden stops and starts, and/or abruptly changing a rotational direction, to create a rotational agitation that can be used to create a desired coffee flavor profile and/or level the coffee bed.

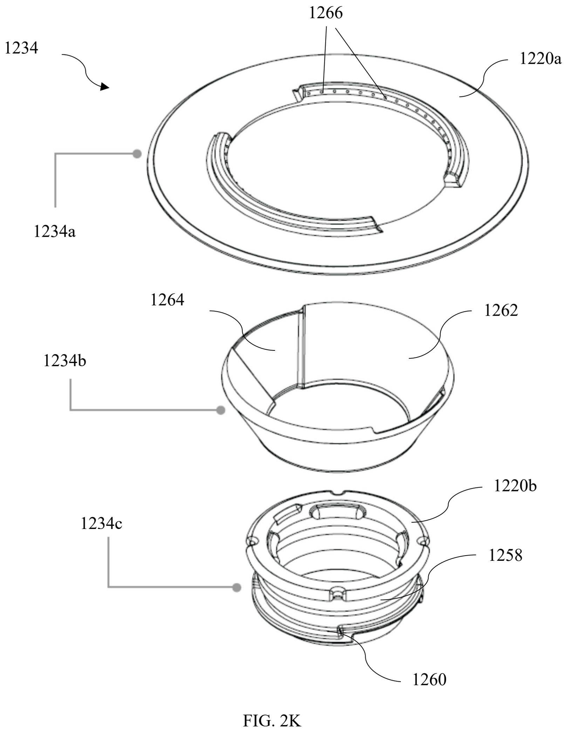

FIG. 2K illustrates components of the gasket assembly 1234 in an exploded view, according to an embodiment of the disclosure. As shown in FIG. 2K, the gasket assembly 1234 may include an upper portion 1234a comprising the second dampener 1220a. A plurality of projections 1266 on the second dampener 1220a may aid in reducing noise created by the vibration of the basket 1204. A middle portion 1234b of the gasket assembly 1234 may comprise a substantially rigid (e.g., plastic) body 1262 configured to transfer vibration from the vibration motor 1214 to the basket 1204. An interior surface of the body 1262 may comprise one or more recessed areas 1264 configured to engage corresponding projections on an outer surface of the basket 1204 to lock the basket 1204 into place upon installation and to prevent slippage during rotation of the basket 1204. A lower portion 1234c of the gasket assembly 1234 may comprise the second dampener 1220b. The lower portion 1234c may also include a bellow 1258 configured to isolate vibration of the body 1262 from the lower portion 1234c of the gasket assembly 1234. The lower portion 1234c may further include a plurality of locking teeth 1260 configured to couple the gasket assembly 1234 to the primary gear 1205c. The locking teeth 1260 may also transfer rotational torque from the primary gear 1205c up through the body 1262 and to the basket 1204.

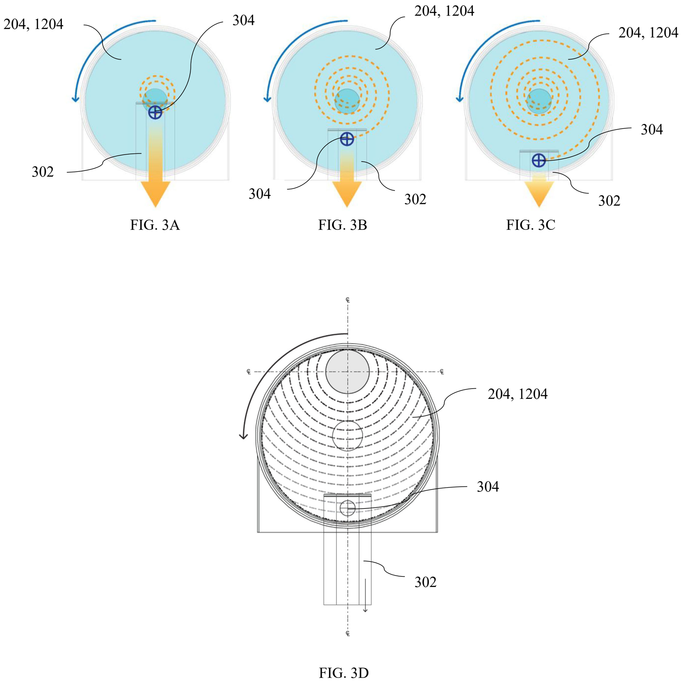

FIGS. 3A-3D illustrate patterns of dispensed water dispensed by the nozzle 302, according to an embodiment of the disclosure. As shown in FIGS. 3A-3C, in some embodiments, the rotational movement of the basket 204, 1204 combined with the lateral movement of the nozzle 302, may operate together to dispense the heated water in a spiral pattern over the coffee grounds. The spiral pattern may start from a center point of the basket 204, 1204 and extend to an outer edge of the basket 204, 1204. For example, as shown in FIG. 3A, the nozzle 302 may be initially positioned to dispense water from an outlet 304 at or near a center point of the basket 204, 1204 as the basket 204 rotates (e.g., counterclockwise). As shown in FIG. 3B, as the basket 204, 1204 continues to turn, the nozzle 302 may move towards or away from the housing 102 such that the outlet 304 gradually moves toward an outer edge of the basket 204, 1204, creating a spiral pattern of the dispensed water. As described in more detail below, the nozzle 302 may dispense the heated water in a laminar flow which, together with the spiral pattern, may replicate manual dispensation of the water from a gooseneck kettle. This type of dispensation may help distribute the water evenly throughout the coffee grounds, resulting in an even extraction of the coffee brew. As shown in FIG. 3C, by selecting (for example, at the user interface 102d) the speed and direction of movement of the nozzle 302, as well as the speed of rotation of the basket 204, any pattern of water dispensation can be created according to the desired "pour over" coffee flavor profile, including a circular pattern as shown in FIG. 3D. The disclosure also contemplates that the pattern may be formed at any starting point over the coffee grounds to produce the desired "pour over" coffee flavor profile. Such flavor profiles can include, in some examples, "balanced," "fruity," "floral," "nutty and chocolaty," "caramel and sweet," "spicey and herbal," "fermented," "smokey," and the like. Each of the flavor profiles can further be associated with a dark, medium, or light roast of the coffee grounds. The disclosure further contemplates that the nozzle 302 may remain stationary during the dispensing of the heated water for a "straight pour" of water at any position over the basket 204, 1204 when using larger cup sizes.

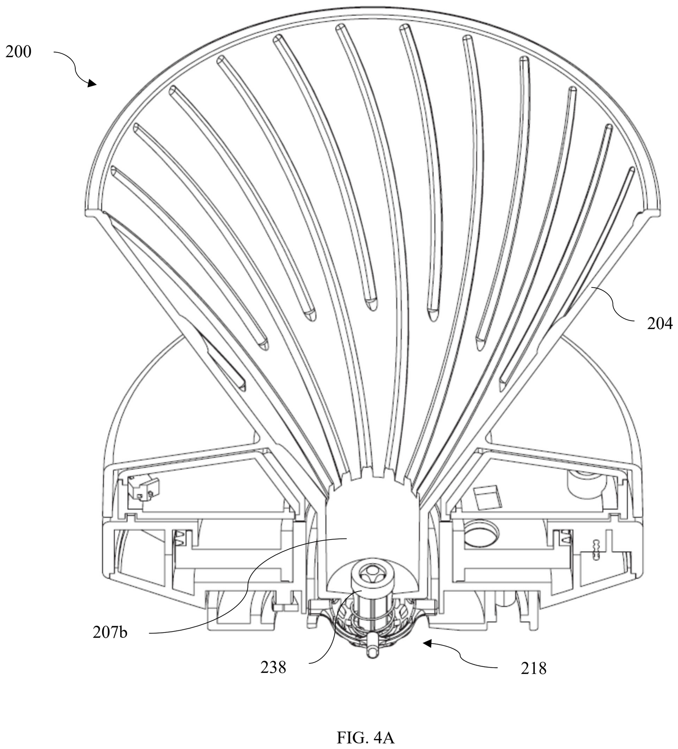

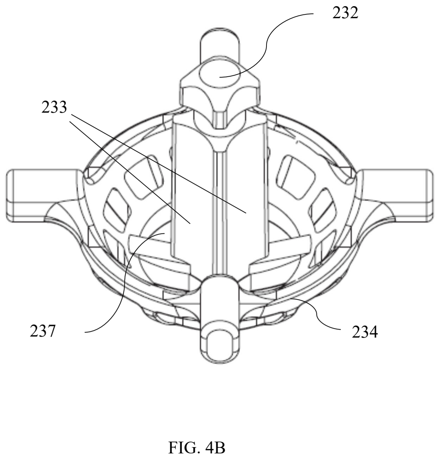

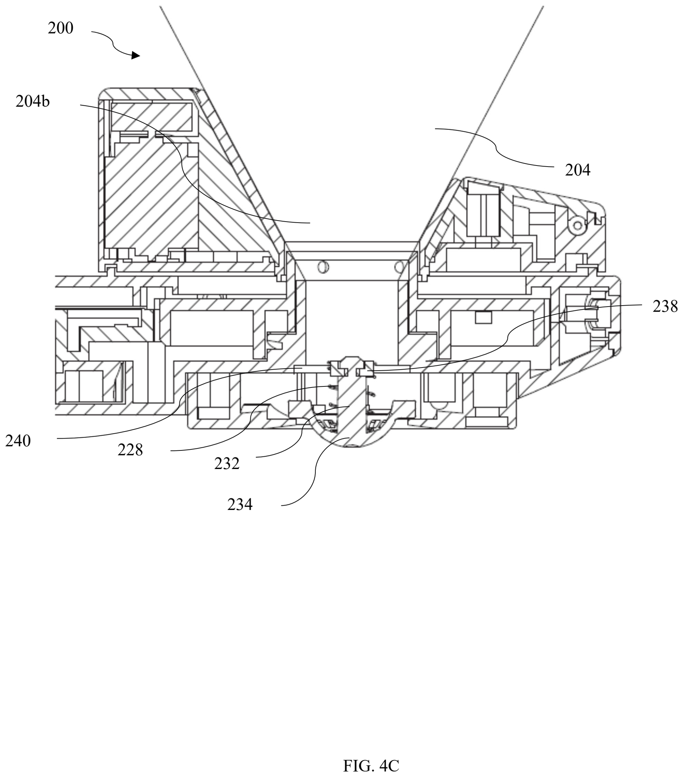

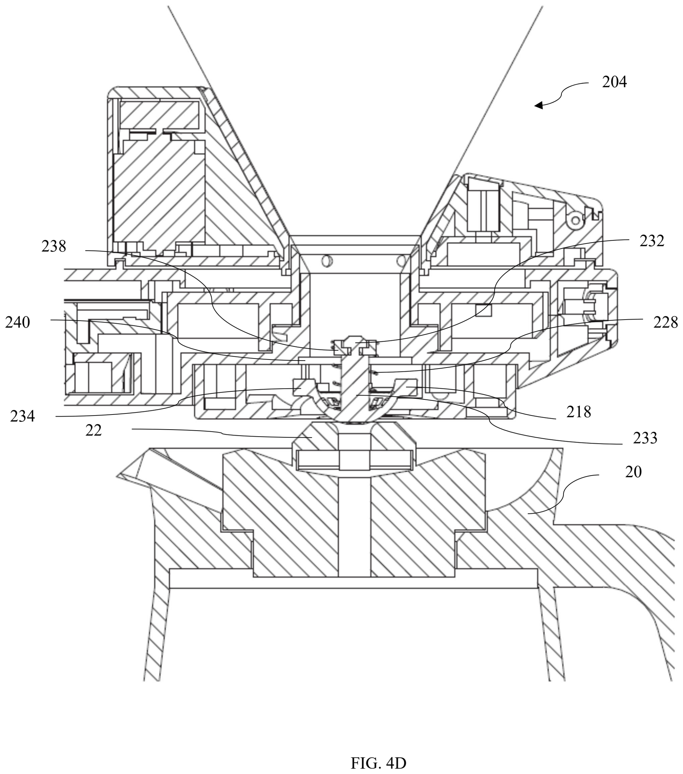

FIGS. 4A-4D illustrate a drip stop 218 of the coffee filter assembly 200, according to an embodiment of the disclosure. While the drip stop 218 is shown in relation to coffee filter assembly 200, it will be appreciated that the drip stop 218 could also be used with coffee filter assembly 1200. As shown in FIG. 4A, the drip stop 218 may help prevent the coffee brew from exiting through the second end 204b of the basket 204 when there is no coffee holding vessel placed underneath the coffee filter assembly 200. The drip stop 218 may also help prevent coffee brew from exiting the basket 204 when the basket 204 is taken off the machine 100 after a brewing sequence has completed. As shown in more detail in FIG. 4B, the drip stop 218 may comprise rod 232 connected to a cap 234. An outer surface of the rod 232 may comprise a plurality of sides 233 (e.g., four sides, as shown) having a concave profile to allow coffee brew to travel along the sides 233 and through an opening 237 in the cap 234 when the drip stop 218 is in the open position. As shown in FIG. 4C, the cap 234 may be biased in a downward (e.g., closed position) by a biasing member, such as a spring 228. In the closed position, a ring 238 on the rod 232 may engage a lip 240 on the basket 204 to form a seal around the rod 232, preventing coffee brew from exiting the basket 204. As shown in FIG. 4D, when a coffee holding vessel 20 is inserted underneath the basket 204, a top 22 of the coffee holding vessel 20 may push the drip stop 218 upward against the force of the spring 228, causing the ring 238 to disengage from the lip 240. This disengagement provides a flow path for the coffee brew along the sides 233 of the rod 232 and through the opening 237 in the cap 234 into the coffee holding vessel 20. In an alternate embodiment when the coffee holding vessel 20 is not tall enough to actuate the drip stop 218, the drip stop 218 may be raised and lowered manually with a lever (not shown) located in the front of the housing 102.

FIG. 5A is a schematic diagram of a water delivery system 300 for dispensing heated water over the coffee grounds 10 in the coffee filter holder 202, 1202, according to an embodiment of the disclosure. As shown in FIG. 3A, the water delivery system 300 may be arranged within the machine housing 102 and may include a water reservoir 306 disposed within the reservoir housing 102c. The water reservoir 306 may include a sensor (not shown) for measuring a level of the water in the water reservoir 306 in real time and providing data about the detected water level to a user. A water pump 308 (e.g., a low-pressure pump) may be configured to pump water from the water reservoir 306 through tubing 318 (e.g., low pressure tubing). The tubing 318 may extend through a heating source 310 (e.g., a heating coil) configured to heat the water as it flows through the tubing 318. A flow meter 312 may be disposed between the water pump 308 and the heating source 310 for measuring the amount of water being pumped from the water reservoir 306. In embodiments, an air pump 314 may work in conjunction with the water pump 308 to pump the water. However, the disclosure contemplates that only the water pump 308 may be used. The water pump 308 may pump the heated water through the tubing 318 into a nozzle assembly 320 disposed in the upper housing 102a. A linear mechanism including a linear motor 316 (e.g., a stepper motor or other suitable motor) may be configured to move the nozzle 302 laterally relative to the upper housing 102a.

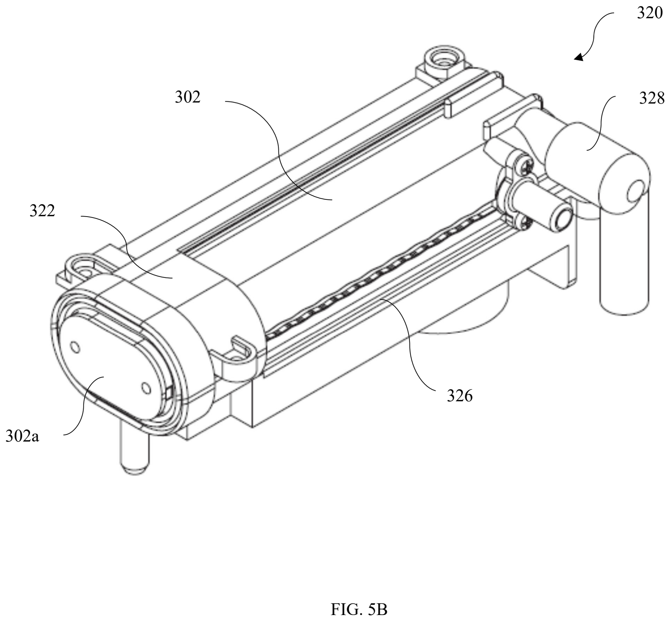

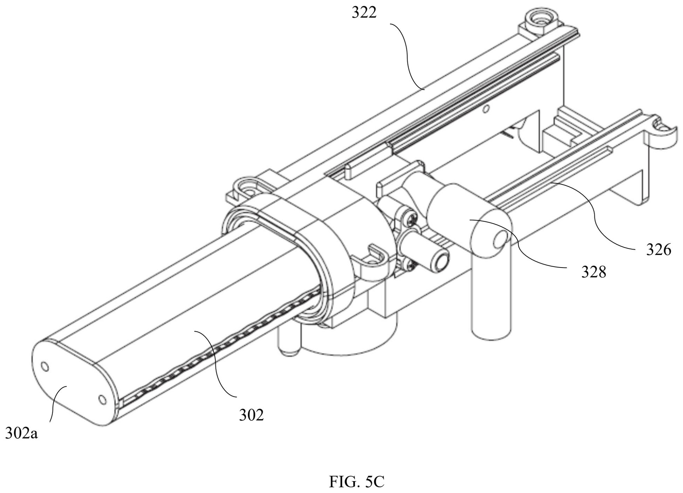

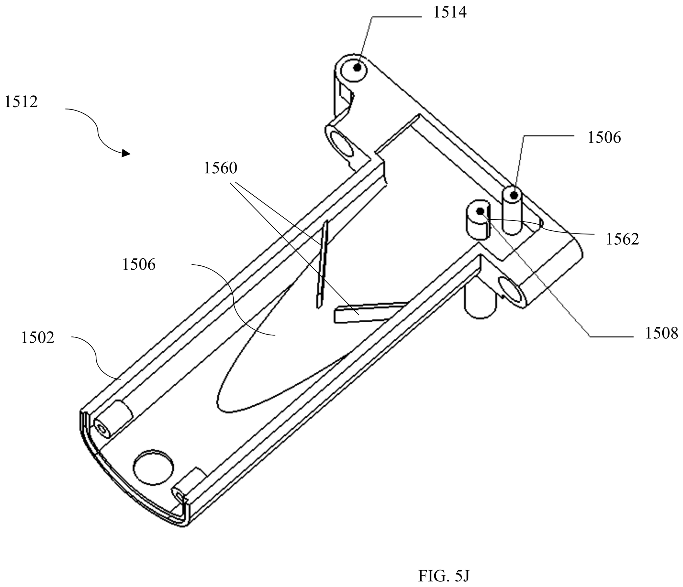

FIGS. 5B and 5C illustrate the lateral movement of the nozzle 302 relative to the upper housing 102a, according to an embodiment of the disclosure. As shown in FIG. 5B, the nozzle assembly 320 may include a frame 322 disposed within the upper housing 102a. The frame 322 may include an actuator assembly to move the nozzle 302 laterally relative to the upper housing 102a. For example, the frame 322 may include a rack and pinion mechanism comprising a linear gear 326 extending along a length of the frame 322. At least one rolling gear 328 may be engageable with the linear gear 326. The rolling gear 328 may be coupled to the nozzle 302 such that, when the linear motor 316 causes rotation of the rolling gear 328, the rolling gear 328 moves relative to the linear gear 326, in turn moving the nozzle 302 between a first position, in which a distal end 302a of the nozzle 302 is retracted within the upper housing 102a (FIG. 5B), and a second position, in which the distal end 302a of the nozzle 302 laterally extends from the upper housing (FIG. 5C). The disclosure also contemplates other suitable types of actuators for laterally moving the nozzle 302, such as movement along a lead screw mechanism 332 (FIG. 5A), 1532 (FIG. 5J), pneumatic actuators, or any other mechanism for laterally moving the nozzle. In embodiments, a travel extent of the nozzle 302 away from the upper housing 102a may be about 90mm. However, the disclosure contemplates other suitable travel extents of the nozzle 302.

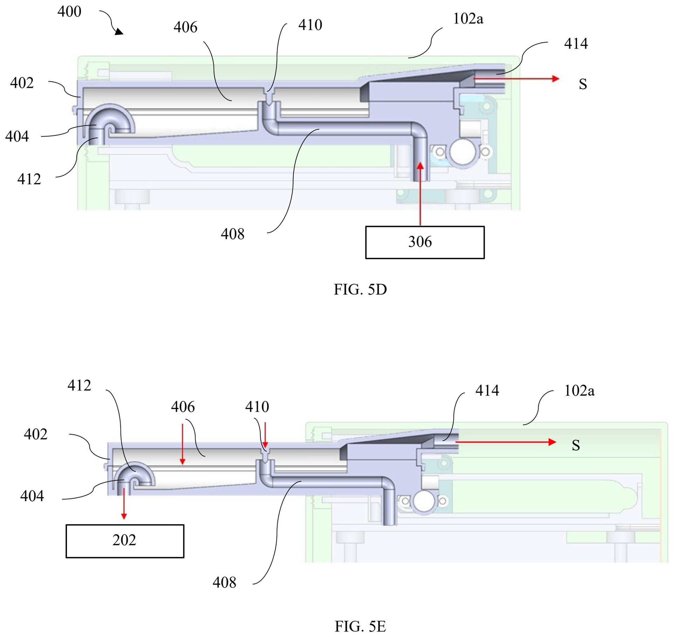

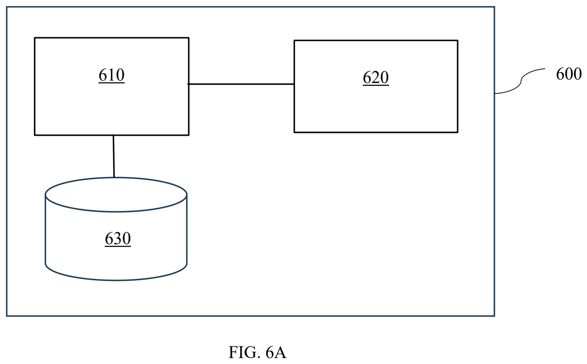

FIGS. 5D and 5E illustrate an alternative configuration of a water delivery system 400 that is configured to mimic the manual pouring of water through a gooseneck kettle to produce a more desirable "pour over" coffee flavor profile. For example, the nozzle 402 of the water delivery system 400 may be configured to dispense the heated water in a direction that is substantially perpendicular to the nozzle 402 and in a laminar flow. A laminar flow occurs where fluid particles follow smooth paths in layers, with little or no mixing between adjacent layers. A laminar flow typically occurs at low velocities and is characterized by the absence of turbulence. The nozzle 402 may further be configured to move laterally relative to the upper housing 102a between a retracted position (FIG. 5D) and an extended position (FIG. 5E). The nozzle 402 may define an interior chamber 406 extending between a water inlet 408 and a water outlet 404. The internal geometry of the water outlet 404 may be shaped to operate as a siphon mechanism 412. For example, the water outlet 404 may be U-shaped, as shown. However, the disclosure contemplates that the water outlet 404 can have other shapes, such as rectangular. A steam outlet 414 in fluid communication with the chamber 406 may be configured to release water vapor or steam S created by the heated water from the chamber 406. A heat sensor 410 (e.g., a NTC sensor or other suitable sensor) may be positioned in the chamber 406 (for example, adjacent the water inlet 408) for sensing a temperature of the heated water. The heat sensor 410 may enable a user to set a desired brewing temperature of the coffee within a specified range (e.g., 90 °C to 96 °C). The heat sensor 410 and flow meter 312 (FIG. 5A) may also be in communication with a computer system 600 (FIG. 6A) to adjust the temperature and flow of water throughout the brewing process

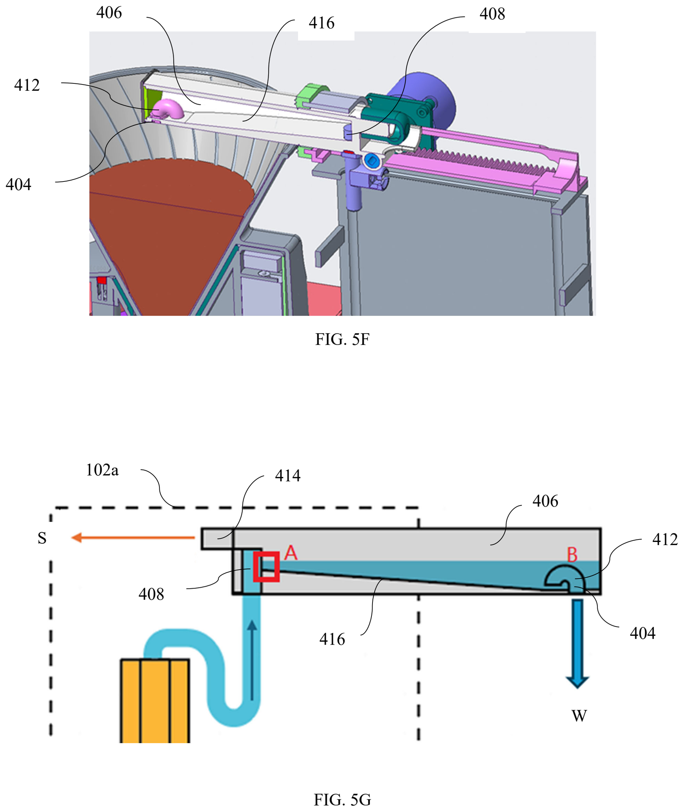

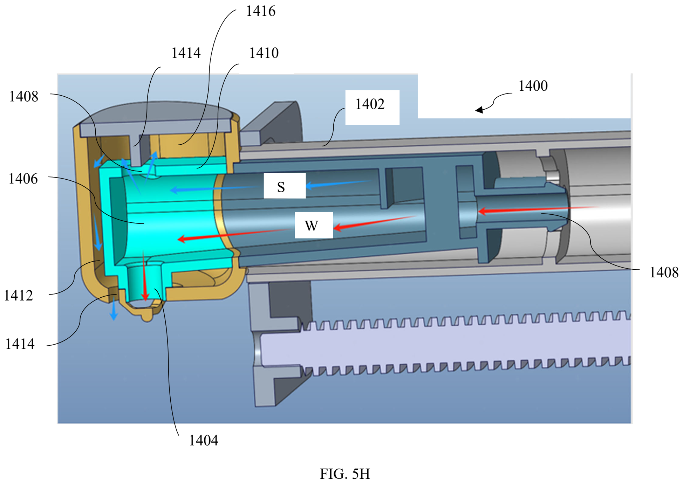

FIGS. 5F and 5G illustrate the action of the siphon mechanism 412, according to an embodiment of the disclosure. As shown in Fig. 5G, the water inlet 408 may be configured to deliver the heated water W to the chamber 406 at a point A that is higher than point B above the water outlet 404. A bottom surface 416 of the chamber 406 may be sloped downward from the water inlet 408 to the water outlet 404. As shown in FIG. 5H, because of the sloped bottom surface 416, a larger volume of heated water W may collect above the water outlet 404 than in the region adjacent the water inlet 408. When the water level reaches the height of point B, the siphon mechanism 412 may be activated, causing the heated water W to flow out of water outlet 404 in a laminar flow under the force of gravity. The disclosure also contemplates that the water reservoir may be positioned in the upper housing 102a to allow gravity to activate the siphon mechanism 412. Meanwhile, the steam S may flow out of the steam outlet 414 in a direction away from the nozzle 402, thus protecting the user from harmful contact with the steam S. The disclosure contemplates that the steam outlet 414 may be connected to tubing for directing the steam S downward toward the coffee holding vessel for preheating the coffee holding vessel and/or cleaning the coffee holding vessel prior to the coffee brew being dispensed into the coffee holding vessel. In other embodiments, the tubing may release the steam in or external to the housing 102.

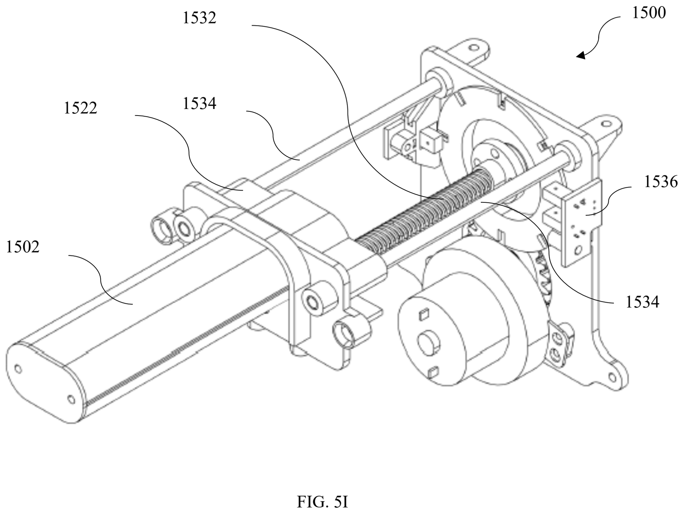

FIG. 5H illustrates an alternative configuration of a water delivery system 1400, according to an embodiment of the disclosure. As shown in FIG. 5I, the water delivery system 1400 may be substantially similar to water delivery system 300, 400 except that the water delivery system 1400 may be configured to separate heated water W flowing through the nozzle 1402 from the steam S generated by the heated water W along two separate flow paths. In embodiments, the nozzle 1402 of the water delivery system 1400 may define an interior chamber 1406 extending between a water inlet 1408 and a water outlet 1404. The water inlet 1408 may be designed to deliver heated water in a substantially horizontal direction relative to the chamber 1406. An opening 1448 in a sidewall 1410 of the chamber 1406 in fluid communication with an interior of the chamber 1406 may allow the steam to exit the chamber 1406. A rib 1444 positioned above the opening 1448 may separate the flow of the steam S such that one portion of the steam S enters a subchamber 1416 of the nozzle 1402 and another portion of the steam S flows through a passageway 1412 at least partially defined by the sidewall 1410 and through a steam outlet 1414.

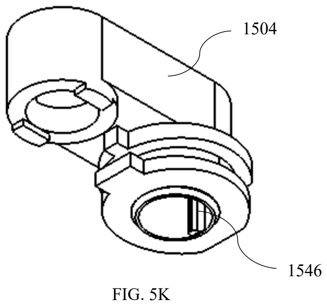

FIGS. 5I-5K illustrate an alternative configuration of a water delivery system 1500, according to an embodiment of the disclosure. As shown in FIG. 5I, the water delivery system 1500 may be substantially similar to water delivery systems 300, 400, 1400 except that the frame 1522 of the nozzle 1502 is configured to move laterally relative to the housing 102 along a lead screw mechanism 1532 and one or more opposing rails 1534. The water delivery system 1500 may further include one or more sensors 1536 (e.g., photoelectric or other suitable sensors) for detecting when the nozzle 1502 is in the fully retracted position and for regulating the speed of extension and retraction of the nozzle 1502. As shown in FIG. 5J, the chamber 1506 of the nozzle 1502 may include a steam outlet 1514 at least one baffle 1560 or other barrier configured to break the pressure of the heated water as it enters the chamber 1506 through the water inlet 1508. The water inlet 1508 may be configured to deliver water into the chamber 1506 through an opening 1562 in a side surface of the water inlet 1508. At least one pin 1564 may be positioned adjacent the opening 1562 to further break the pressure of the heated water as it enters the chamber 1506. As shown in FIG. 5K, the nozzle 1502 may also include a rectangular shaped water outlet 1504 to act as the siphon mechanism. An inner surface of the water outlet 1504 may include a vertical rib 1546 for improving the laminar flow of the dispensed water. The disclosure also contemplates that multiple ribs 1546 or the like may be used to reduce pressure and improve laminar flow of the heated water.

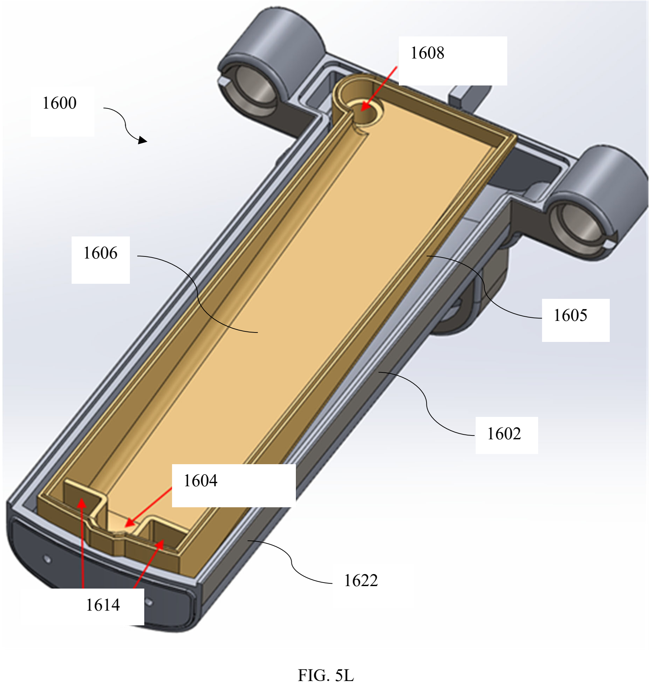

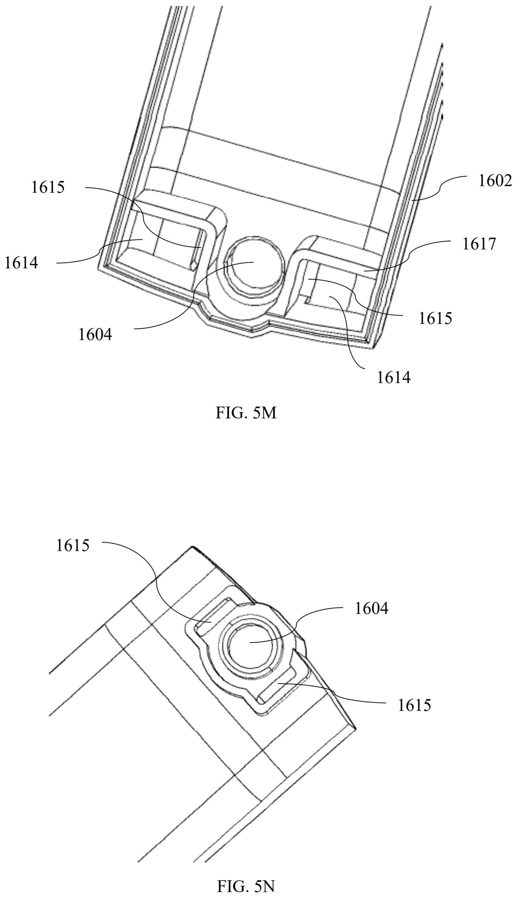

FIGS. 5L-5N illustrate an alternative configuration of a nozzle 1602 of a water delivery system 1600, according to an embodiment of the disclosure. As shown in FIG. 5L, the water delivery system 1600 may be substantially similar to water delivery systems 300, 400, 1400, 1500 except that the water inlet 1608 may be designed to deliver heated water in a substantially vertical direction relative to the chamber 1606 of the nozzle 1602. The chamber 1606 may include a water tray 1605 that is sloped relative to the frame 1622 of the nozzle 1602 from the water inlet 1608 to the water outlet 1604. An angle of the slope of the water tray 1605 may be selected such that all of the heated water delivered into the chamber 1606 is dispensed through the water outlet 1604 under force of gravity alone without the need of a pumping mechanism. In an embodiment, an angle of the slope may be about 5 degrees. However, the disclosure contemplates other angles of the slope sufficient to dispense the water from the water outlet 1604 under the force of gravity alone. The nozzle 1602 may further include steam outlet 1614 positioned adjacent the water outlet 1604. As shown in FIGS. 5M and 5N, the steam outlet 1614 may comprise at least one opening 1615 in fluid communication with the chamber 1606 and positioned adjacent the water outlet 1604. In embodiments, the at least one opening 1615 may be configured to release water vapor created by the heated water in a same direction as the dispensed water. In embodiments, the at least one opening 1615 may be two openings positioned on either side of the water outlet 1604 and separated from the water outlet 1604 by an L-shaped barrier 1617. However, the disclosure contemplates more or fewer than two openings 1615 in other suitable configurations relative to the water outlet 1604.

FIG. 6A is a block diagram of a computer system 600 that may be used as a controller in the machine 100 disclosed herein or used to perform one or more of the methods described herein. Computer system 600 may include one or more processors 610 and one or more non-transitory computer-readable storage media (e.g., memory 620 and/or one or more storage media 630). The processor 610 may control writing data to and reading data from the memory 620 and the non-volatile storage media 630 in any suitable manner, as the aspects of the invention described herein are not limited in this respect. The computer system 600 also may include a volatile storage media. To perform functionality and/or methods described herein, the processor 610 may execute one or more instructions stored in one or more computer-readable storage media (e.g., the memory 620, storage media, etc.), which may serve as non-transitory computer-readable storage media storing instructions for execution by the processor 610. Computer system 600 also may include any other processor, controller or control unit needed to route data, perform computations, perform I/O functionality, etc. For example, computer system 600 may include any number and type of input functionality to receive data and/or may include any number and type of output functionality to provide data and/or audio and/or visual feedback to a user and may include control apparatus to operate any present I/O functionality.

In connection with the coffee brewing programs and other processes described herein, one or more programs configured to receive user input(s), receive signals from one or more sensors, evaluate inputs, set run times and/or run speeds, and/or provide feedback and/or information to user may be stored on one or more computer-readable storage media of computer system 600. Processor 610 may execute any one or combination of such programs that are available to the processor by being stored locally on computer system 600 or accessible over a network. Any other software, programs or instructions described herein may also be stored and executed by computer system 600. Computer system 600 may be part of a standalone computer, server, distributed computing system, mobile device, etc., and may be connected to a network and capable of accessing resources over the network and/or communicate with one or more other computers connected to the network. The computer system may also include a wireless transceiver. Implementation of some of the techniques described herein using a computer system (such as computer system 600) is an integral component of practicing these techniques, as aspects of these techniques cannot be realized absent computer implementation. At least part of the inventors' insight is derived from the recognition that control of automatic pour over coffee machines in certain manners described herein can only be implemented using a computer system.

The terms "program" or "software" are used herein in a generic sense to refer to any type of computer code or set of processor-executable instructions that can be employed to program a computer or other processor to implement various aspects of embodiments as discussed above. One of skill in the art will appreciate that, according to one aspect, one or more computer programs which, when executed perform methods of the disclosure provided herein, need not reside on a single computer or processor, but may be distributed in a modular fashion among different computers or processors to implement various aspects of the technology described herein. Processor-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments. Also, data structures may be stored in one or more non-transitory computer-readable storage media in any suitable form.

According to some embodiments, the user interface and/or controller may be partially or completely present on a wireless device which is physically separate from the automatic pour over coffee machine 100 yet be considered as being a component of the apparatus. In some embodiments, all or a portion of the user interface 102d may utilize a touchscreen interface or soft keys. Other examples of inputs for user interfaces include dials, switches, rotary knobs, slide knobs, voice-activated commands, virtual keyboards, or any other suitable input.

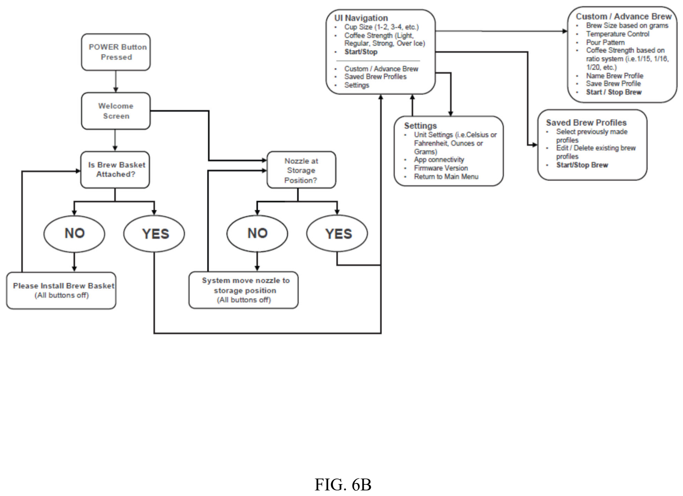

FIG. 6B is a flow chart of a brewing process control sequence 640, according to an embodiment of the disclosure. The brewing process control sequence 640 may guide the user through selection of a desired stored brewing sequence at the user interface 102d depending on the user's desired coffee flavor profile. Alternatively, a user may customize and store their own preferred brewing sequence depending on the desired coffee flavor profile.

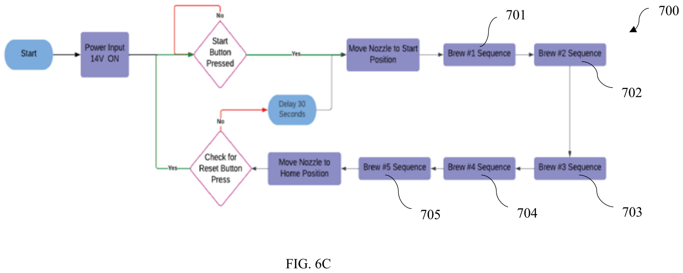

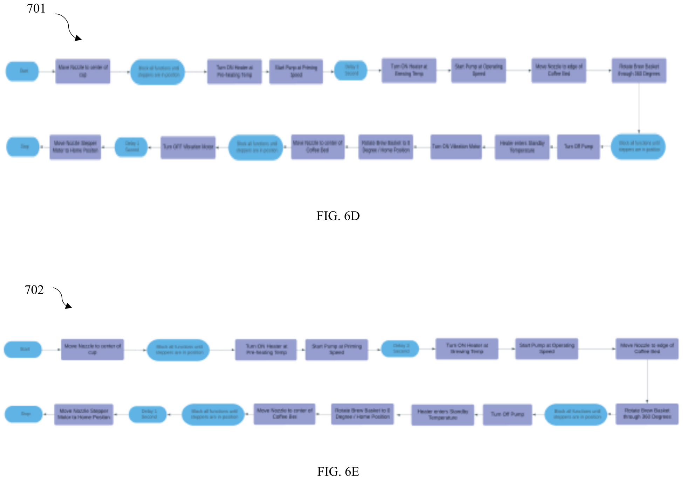

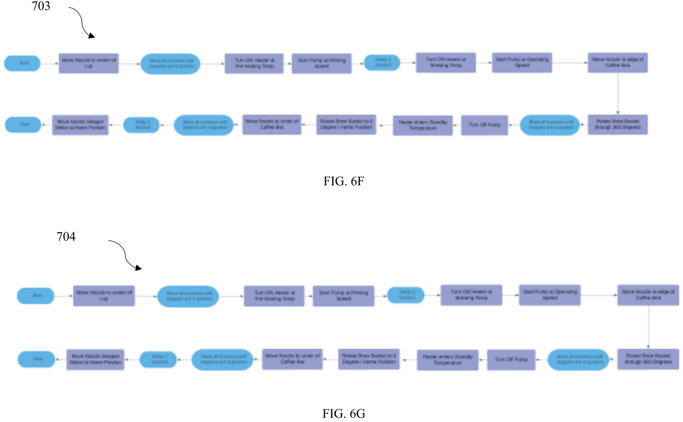

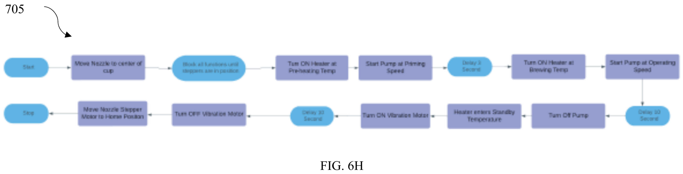

FIGS. 6C-6H are a flow charts of a coffee brewing sequence 700, according to an embodiment of the disclosure. As shown in FIG. 6C, the coffee brewing sequence 700 may selectively activate at least one of the rotation motor 208, the linear motor 316, the vibration motor 214, 1214, the water pump 308, the air pump 314 and/or one or more of the sensors described herein in performing a selected brewing pattern comprising a plurality of sequential brewing subsequences. The plurality of sequential brewing subsequences may be five brewing subsequences 701, 702, 703, 705, 705 for brewing a one cup recipe, as shown. However, the disclosure contemplates that between one and ten brewing subsequences may be included in the brewing sequence 700. A total time period of the performance of the selected brewing pattern may be between about two minutes and about four minutes and 30 seconds, depending on the selected brewing sequence. During each brewing subsequence, the computer system 600 may control, for example, turning the water pump 308 on/off, turning the air pump 314 on/off, linear movement in either direction of the nozzle 302, and rotation and/or vibration of the basket 204, 1204. An example of the first brewing subsequence 701 is shown in FIG. 6D. An example of second brewing subsequence 702 is shown in FIG. 6E. An example of the third brewing subsequence 703 is shown in FIG. 6F. An example of the fourth brewing subsequence 704 is shown in FIG. 6G. An example of the fifth brewing subsequence 705 is shown in FIG. 6H.

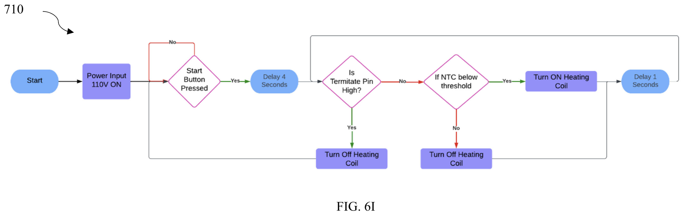

FIG. 6I is a flow chart of a heating coil operation sequence 710, according to an embodiment of the disclosure. During, the heating coil operation sequence 710, the computer system 600 may control, for example, turning the heating source 310 on/off depending on the temperature of the heated water in the chamber 406 as measured by the heat sensor 410.

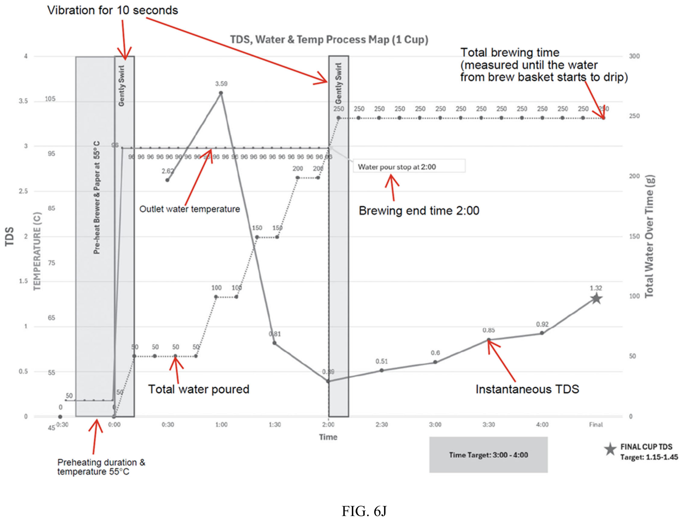

FIG. 6J is a graph of a brewing sequence process map for brewing a one cup recipe, according to an embodiment of the disclosure. The graph illustrates factors that may be controlled during a selected brewing sequence, such as amount of water poured, duration of water pouring and pauses in water pouring, vibration duration and intervals, brewing temperature, preheating duration and temperature, instantaneous and final total dissolved solids (TDS) (i.e., the amount of dissolved solids present in the coffee brew), brewing end time and total brew time. Each of these factors determine the quality and flavor profile of the brewed coffee. As shown in FIG. 5F, the brewing sequence may include preheating the water in the water reservoir 306 to about 55 °C*.* The water from the reservoir 306 may then be rapidly heated to about 96 °C for about 10 seconds, while a first vibration of the basket 204 settles and evenly distributes the coffee grounds within the basket 204. The heated water may be slowly poured into the basket 204 at stepped intervals for about two minutes total. The basket 204 may then be vibrated for another ten seconds at the end of the water pour. The basket 204 may then be allowed to drip the coffee brew into the coffee holding vessel for about one to two minutes. As shown in FIG. 5F, throughout the brewing process, instantaneous TDS may be measured at 30-second intervals to track how extraction of the coffee brew progresses over time. Once brewing is complete, the final TDS may be measured from the coffee brew in the coffee holding vessel. This final TDS value may correlate directly with the user's perceived strength and taste of the coffee. In examples, a target final TDS may be between 1.15 and 1.45 ppm.

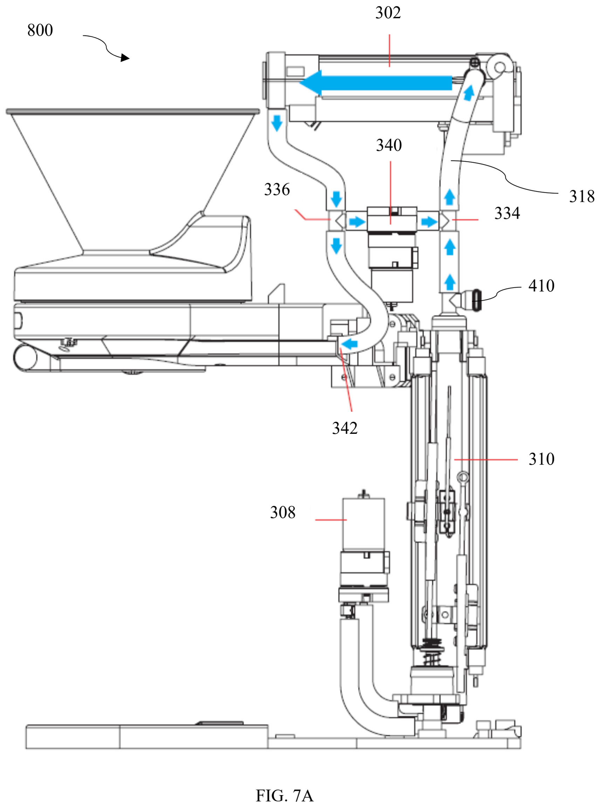

FIGS. 7A-7D illustrates various recirculation systems 800 for recirculating water vapor within the machine 100, according to embodiments of the disclosure. The recirculation methods used by the systems 800 may aid in achieving an optimal water brewing temperature and conserve condensed water vapor within the machine 100.

As shown in FIG. 7A, in a first method, water may initially be pumped from the water reservoir 306 (FIG. 5A) by a water pump 308 through the heating source 310. A heat sensor 410 (e.g., a NTC sensor or other suitable sensor) may be positioned adjacent the heating source 310. The water pump 308 may be a one inlet, one outlet pump. Water may then exit the top of the heating source 310 and travel through a vertical portion of a first one-way T-connector 334 in fluid communication with a recirculation pump 340. The water may continue to travel through the tubing 318 to the nozzle 302. Water vapor in the nozzle 302 may then exit the nozzle 302 and travel through a vertical portion of a second one-way T-connector 336 in fluid communication with the recirculation pump 340. When activated, the recirculation pump 340 may recirculate the condensed water vapor through a horizontal portion of the first one-way T-connector 334 and back into the nozzle 302. This recirculation may preheat the nozzle 302 to aid in achieving a target brewing temperature of the water. When the optimal temperature has been reached, the recirculation pump 340 may then be turned off and any remaining water droplets may be directed by the second one-way T-connector 336 to the coffee holding vessel through an opening 342 in the tubing 318.

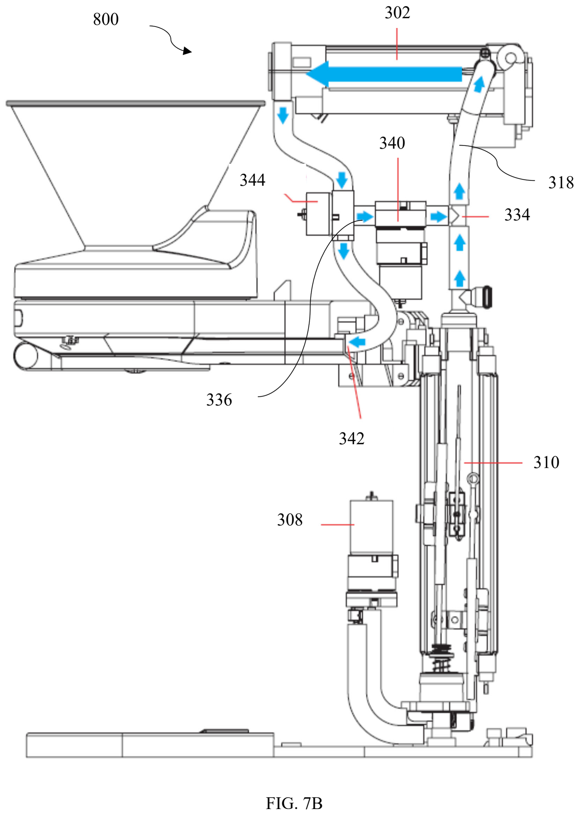

As shown in FIG. 7B, in an alternative method, water may initially be pumped from the water reservoir 306 by the water pump 308 through the heating source 310. The water may then exit the top of the heating source 310 and travel through the first one-way T-connector 334 in fluid communication with the recirculation pump 340. The water may continue to travel through the tubing 318 to the nozzle 302. Water vapor in the nozzle 302 may then exit the nozzle 302 and travel through the second one-way T-connector 336. When activated, a solenoid valve 344 may be configured to direct the condensed water vapor to the recirculation pump 340, which in turn may recirculate the condensed water vapor back into the nozzle 302. When an optimal water temperature has been reached in the nozzle 302, the recirculation pump 340 may be turned off and the deactivated solenoid valve 344 may direct the any water droplets to the coffee holding vessel through the opening 342.

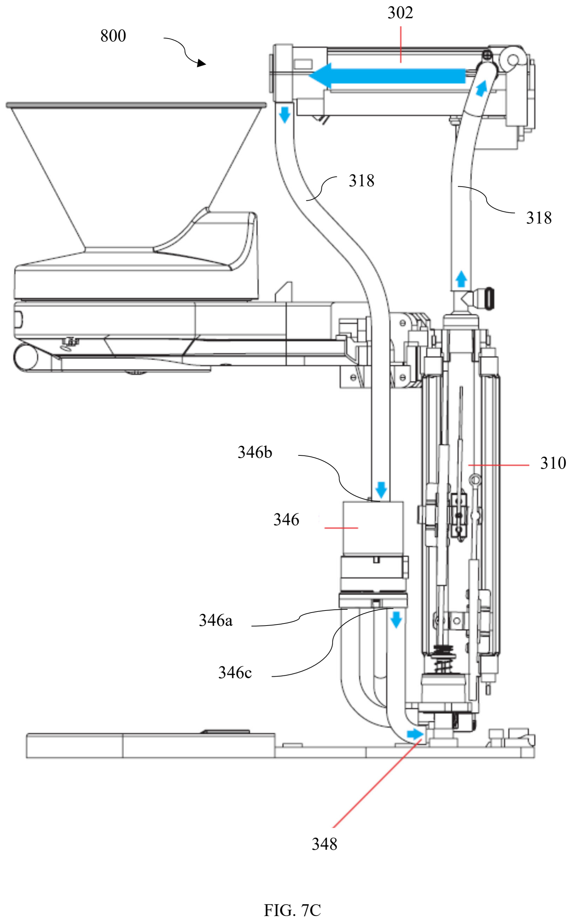

As shown in FIG. 7C, in another alternative method, water may initially be pumped from the water reservoir 306 through a first outlet 346a of a two-inlet, two-outlet water pump 346 and then through the heating source 310. The water may exit the top of the heating source 310 and travel directly through the tubing 318 to the nozzle 302. Water vapor in the nozzle 302 may then exit the nozzle 302 and travel back through the tubing 318 and through a first inlet 346b of the water pump 346. The water pump 346 may then direct the condensed water vapor back through a second outlet 346c of the water pump 346 into the water reservoir 306 through the opening 348.

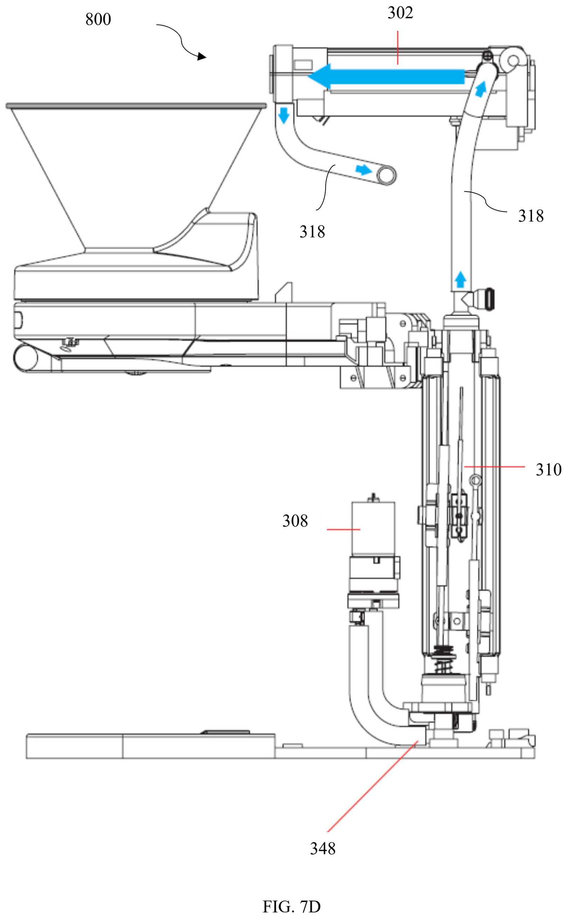

As shown in FIG. 7D, in a final alternative method, water may initially be pumped from the water reservoir 306 by the water pump 308 through the heating source 310. The water may exit the top of the heating source 310 and travel through the tubing 318 to the nozzle 302. Water vapor in the nozzle 302 may then exit the nozzle 302 and any water droplets may be expelled from the tubing 318 to the top of the water reservoir (not shown). Meanwhile, the water pump 308 may pump recirculated condensed water vapor back through the heating source 310 through opening 348. The disclosure also contemplates that the condensed water vapor may be directed into a liquid waste receptacle (not shown).

While the disclosure particularly shows and describes preferred examples, those skilled in the art will understand that various changes in form and details may exist without departing from the spirit and scope of the present application as defined by the appended claims. The scope of this present application intends to cover such variations. As such, the foregoing description of examples of the present application does not intend to limit the full scope conveyed by the appended claims.

## Claims

1. An automatic pour over coffee machine comprising:
a machine housing;
a coffee filter assembly supported on the machine housing, the coffee filter assembly comprising:
a basket for holding coffee grounds, the basket removably insertable into a gasket assembly; and
a rotation assembly for rotating the basket relative to the machine housing;
a water delivery system arranged within the machine housing, the water delivery system configured to dispense heated water in a laminar flow over the coffee grounds, the water delivery system comprising:
a nozzle for receiving heated water, the nozzle comprising a water outlet; and
a driving assembly coupled to the nozzle for moving the nozzle laterally relative to the machine housing; and
a vibration assembly for vibrating the basket in a selected vibration sequence;
wherein a combination of rotation of the basket, lateral movement of the nozzle, and vibration of the basket in the selected vibration sequence produces a desired "pour over" coffee flavor profile.

2. The automatic pour over coffee machine of claim 1, wherein the basket comprises a flat lower surface and is configured to receive a cone-shaped coffee filter holder.

3. The automatic pour over coffee machine of claim 1, further comprising at least one dampener configured to dampen vibration from the vibration assembly.

4. The automatic pour over coffee machine of claim 3, wherein the at least one dampener is at least one first dampener positioned between the gasket assembly and the machine housing.

5. The automatic pour over coffee machine of claim 3, wherein the at least one dampener is a second dampener co-molded to a body of the gasket assembly.

6. The automatic pour over coffee machine of claim 1, further comprising a drip stop configured to selectively prevent coffee brew from exiting the basket.

7. The automatic pour over coffee machine of claim 1, wherein the water outlet is configured to dispense the heated water in a direction that is substantially perpendicular to the nozzle.

8. The automatic pour over coffee machine of claim 1, wherein the nozzle comprises:
a water inlet; and
a chamber defined by the nozzle between the water inlet and the water outlet;
wherein a bottom surface of the chamber is sloped between the water inlet and the water outlet.

9. The automatic pour over coffee machine of claim 8, wherein an angle of the slope of the bottom surface of the chamber is about 5 degrees.

10. The automatic pour over coffee machine of claim 1, further comprising a steam outlet in fluid communication with the chamber, the steam outlet configured to release water vapor created by the heated water.

11. The automatic pour over coffee machine of claim 1, further comprising a switch for sensing a speed of rotation of the basket.

12. The automatic pour over coffee machine of claim 1, further comprising a sensor for sensing a speed and direction of the lateral movement of the nozzle relative to the machine housing.

13. The automatic pour over coffee machine of claim 1, wherein an inner surface of the water outlet comprises a rib for improving the laminar flow of the dispensed water.

14. A method of producing a desired "pour over" coffee flavor profile in an automatic pour over coffee machine, the method comprising:
moving a nozzle laterally relative to a housing of the automatic pour over coffee machine;
dispensing the heated water from a water outlet of the nozzle over a basket of the automatic pour over coffee machine, the basket having coffee grounds;
rotating the basket relative to the housing; and
vibrating the basket in a selected vibration sequence;
wherein a combination of rotation of the basket, lateral movement of the nozzle, and vibration of the basket in the selected vibration sequence produces the desired "pour over" coffee flavor profile.

15. The method of claim 14, further comprising vibrating the basket in the selected vibration sequence before, during, or after dispensing the heated water over the coffee grounds.

16. The method of claim 14, further comprising dispensing the heated water in a direction that is substantially perpendicular to the nozzle in a laminar flow.

17. The method of claim 14, further comprising rotating the basket in a single rotational direction with sudden stops and starts in the rotation to create rotational agitation of the coffee grounds.

18. The method of claim 14, further comprising abruptly changing a rotational direction of the basket to create a rotational agitation of the coffee grounds.

19. A rotation assembly for use with an automatic pour over coffee machine according to claim 1, the rotation assembly comprising:
a basket for holding coffee grounds;
a gasket assembly for receiving the basket; and
a rotation motor operatively coupled to the gasket assembly for rotating the gasket assembly relative to a housing of the automatic pour over coffee machine during dispensing of heated water in a laminar flow over the coffee grounds;
wherein a speed of rotation of the basket together with the laminar flow of the heated water produces a desired "pour over" coffee flavor profile.

20. A vibration assembly for use with an automatic pour over coffee machine of claim 1, the vibration assembly comprising:
a basket for holding coffee grounds;
a gasket assembly for receiving the basket;
a basket holder configured to support the gasket assembly; and
a vibration motor housed within the basket holder, the vibration motor operatively coupled to the to the gasket assembly to vibrate the basket in a selected vibration sequence;
wherein vibration of the basket in the selected vibration sequence produces a desired "pour over" coffee flavor profile.
